# EUROPEAN PATENT APPLICATION

(11) **EP 0 715 818 A1**
(43) Date of publication of application: **12.06.1996**
(21) Application number: 95118441.5
(22) Date of filing: 23.11.1995
(51) Int. Cl.: A43B 5/04, A43B 19/00, B29D 31/505

(54) **Inner liner for sports boots and method of its manufactures**

(30) Priority: 05.12.1994 IT UD940197
(71) Applicant: KENTA SPORT AKTIENGESELLSCHAFT, Vaduz (LI)
(72) Inventor: Garofolo, Roberto, I-33100 Udine (IT)
(74) Representative: Petraz, Gilberto Luigi

(57) **Abstract**

Inner liner for sports boots, which is advantageously, but not only, for skiing boots, boots for downhill skiing or for use with snow-boards, mountaineering boots in general, ankle-boots for roller-skating or ice-skating or other types of sports boots in general and which comprises at least a first inner layer (11) made of a spongy foam material of a low density and at least a second outer layer (12) made of a spongy foam material of a high density, the inner (11) and outer (12) layers being associated with each other and solidly united together and then conformed by thermoforming, and the relative fabrication method.

## Description

This invention concerns an inner liner for sports boots and the relative method of embodiment, as set forth in the respective main claims.

The invention is employed advantageously, but not only, in cooperation with skiing boots for downhill skiing and for use with snowboards, after-skiing boots or mountaineering boots in general, such as climbing boots for instance.

To be more exact, the inner liner according to the invention is applied to sports boots which, owing to their type of use, have to ensure a high outer rigidity to withstand stresses, forces and possible impacts; at the same time the liner has to provide the user with protection against the outside temperature, suitability of the boot for being worn and also a given play so as to ensure the ability, even if restricted, of moving the foot within the boot itself.

The state of the art includes inner liners which are positioned, in particular, within skiing boots and, more generally, substantially within any type of sports boots, whether for mountaineering or not, for the purpose of ensuring a high degree of comfort and suitability for being worn on the foot of the user.

These inner liners have also the purpose of protecting the foot of the user against the outside temperature.

In particular, these inner liners are necessary for sports boots which have an especially rigid outer structure, as is the case with skiing boots or ankle boots for roller-skating or for ice-skating.

This rigid outer structure has the purpose either of withstanding stresses, forces and impacts during use or of ensuring an adequate protection for the user and in particular for his ankles.

It is known that these inner liners are generally constructed with a layer of a spongy material, such as dunlopillo for instance, possibly lined on its inner and/or outer sides with a covering film.

The density of this spongy layer conditions the characteristics of deformability of the layer and thus determines, on the one hand, the degree of resistance to impacts and external stresses and also the capacity of thermal insulation against the outside temperature, and, on the other hand, the degree of adaptation to the foot of the user and therefore the greater or lesser softness and suitability of the layer for being worn.

It is thus clear that the need to ensure great resistance and a great capacity of thermal insulation clashes with the need to ensure a high level of comfort and suitability for being worn by the user.

This situation has so far not made possible the production of efficient inner liners which can be satisfactorily used substantially for any type of application.

The present applicants have designed, tested and embodied this invention to overcome the above shortcomings and to achieve further advantages.

This invention is set forth and characterised in the respective main claims, while the dependent claims describe variants of the idea of the main embodiment.

The purpose of this invention is to provide an inner liner for sports boots which is able to be used in particular in cooperation with skiing boots or mountaineering boots in general but also with other types of sports boots or ankle-boots such as jogging boots, football boots, cycling boots, ankle-boots for roller-skating and ice-skating or yet other boots.

The inner liner according to the invention can be either of a type closed at its front or of a type open at its front to assist entry of the foot into the liner.

In a special form of embodiment the inner liner according to the invention includes at its front at least one flap which can be partly superimposed.

According to the invention the inner liner consists of at least two respective layers, a first inner layer facing the foot of the user and a second outer layer facing towards the outer structure of the boot, whether that structure consists of an outer shell, an upper, etc.

The first inner layer and the second outer layer are both made of a microporous, spongy foam material.

According to the invention this foam material possesses high properties of resistance to impregnation by water and therefore is very quickly dried whenever it has been wetted.

According to the invention the first inner layer is made of a spongy material of a low density, whereas the second outer layer is made of a spongy material of a high density.

This embodiment enables the boot, owing to the high density of the material forming the second outer layer, to provide a great resistance to any impacts from the exterior and also a high degree of thermal insulation against the outside environment and also protection against water.

At the same time, the low density of the material forming the first inner layer ensures a high degree of deformability of the material and therefore provides excellent conditions of suitability for wearing and of comfort for the foot of the user.

This low density also provides a given ability of movement of the foot and a given resilient play within the boot.

According to a first embodiment of the invention the inner liner is produced as one single body by injection-moulding in a mould which reproduces the finished form of the liner.

According to another embodiment of the invention the inner liner is produced by shearing, according to a template from a flat sheet comprising at least two layers of spongy foam material having different densities, at least one element conformed with two parts.

These two parts are then united structurally to each other along a great part of their periphery so as to provide an unfinished inner liner which is then thermoformed to make the finished inner liner.

According to a first embodiment of the invention this element is sheared while keeping the two parts united to each other along a common spine, the two parts being substantially counterparts.

According to a second form of embodiment of the invention the element is sheared to constitute two separate and independent parts which are thereafter united to each other.

In this case the two separate parts may be substantially counterparts and are associated with each other along the medium plane of the liner so as to form an unfinished liner.

According to a variant the two separate parts have different shapes; the first part is associated with the frontal upper zone of the foot, whereas the second part is associated with the lower rear zone of the foot, these two parts being associated with each other thereafter along their respective edges to form an unfinished liner.

The unfinished liner thus produced then undergoes thermoforming to obtain a finished inner liner.

According to a first form of embodiment of the invention the unfinished inner liner is heated up to its softening temperature, which depends on the type of material forming the flat sheet, and is then positioned on an aluminium die, which is thereafter introduced into a thermoforming mould.

According to a second form of embodiment the softened unfinished liner is inserted into a shoe or boot and a foot is then inserted until full cooling has occurred.

This flat sheet can be of a type consisting of two layers having different characteristics.

According to a variant the flat sheet is produced by the combining of at least two flat sheets which have different characteristics and are combined with each other, for instance by stitching, adhesion, welding, hot-rolling or other equivalent means.

In the case of hot-rolling the union of the two layers is obtained by means of adhesion through melting of the materials at the zone of union.

In this case a continuous film becomes formed on the outer surfaces of the two layers in a natural manner owing to at least partial melting of the material and acts as a protection and reinforcement of the layer itself.

According to a variant, at least one bonding layer is interposed between the two layers.

According to another variant at least one of the two layers is covered on its relative outer surface with at least a protective and reinforcing film, which is advantageously thin and possibly microporous, for the purpose of providing extra resistance and protection for the layer.

The possible layers formed by the layers of spongy material together with their relative protective and reinforcing films may also be united by one single hot-rolling process or by union of the two layers previously coated with the relative films.

According to yet another variant three or more layers of spongy material having a density that increases from the inside to the outside of the liner itself are included.

The attached figures are given as a non-restrictive example and show a preferred embodiment of the invention as follows:-
- Fig.1: shows a partial view of a partly cut-away inner liner for sports boots according to the invention;
- Fig.2: shows in an enlarged scale the cross-section according to the arrows A-A of Fig.1;
- Figs.3a, 3b and 3c: show three possible forms of embodiment of the inner liner according to the invention.

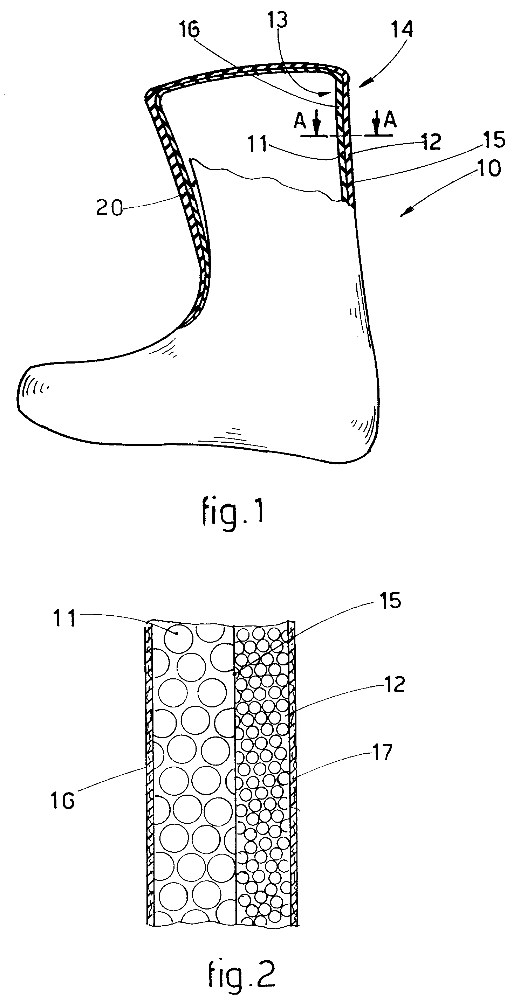

Fig.1 shows a possible inner liner 10 for sports boots, which is used in this case in a skiing boot or an ankle-boot for skating.

The inner liner 10 may have substantially any shape and size according to the specific type of use and specific application.

The inner liner 10 can be of a type closed or open at its front.

The inner liner 10 may include at its front opening 20 a flap which can be at least partly superimposed to close the front opening 20.

According to the invention the inner liner 10 consists of a first inner layer 11 facing towards the inside 13 of the boot or ankle-boot to which it is applied, namely on the side facing the foot of the user, and of a second outer layer 12 facing towards the outside 14, namely on the side facing the outer shell or upper of the boot or ankle-boot to which it is applied.

The first layer 11 facing inwards 13 is made of a spongy foam material such as dunlopillo or an analogous material having a low density and therefore possessing high properties of deformability and good adaptation to the foot of the user.

The second layer 12 facing outwards 14 has a high density and therefore possesses high properties of resistance to impacts, thermal insulation against the external environment and watertightness.

According to a variant at least one bonding layer 15 consisting, for instance, of a heat-actuatable adhesive is included between the first inner layer 11 and the second outer layer 12.

According to another variant the relative outer surfaces of the first inner layer 11 and second outer layer 12 are coated with respective inner 16 and outer 17 protective and reinforcing films. These films 16,17 consist advantageously of leather or another microporous material so as to provide transpiration for the foot.

In a first embodiment of the invention shown in Fig.1 the inner liner 10 is produced as one single body by means of injection moulding.

This method can be carried out either by injecting one single product at two times and by making that product expand in different ways or by injecting at two successive times two different products with different expansion characteristics.

In another embodiment of the invention the inner liner 10 is produced by shearing, according to a template from a flat sheet, at least one element conformed with two parts 19a, 19b, which are then united along a great part of their periphery so as to produce an unfinished liner which is then thermoformed to obtain the finished inner liner 10.

This flat sheet may comprise at least two layers, an inner layer 11 and an outer layer 12 respectively, or may be obtained with two different layers 11, 12 combined with each other, for instance by stitching, adhesion, hot-rolling or another suitable method.

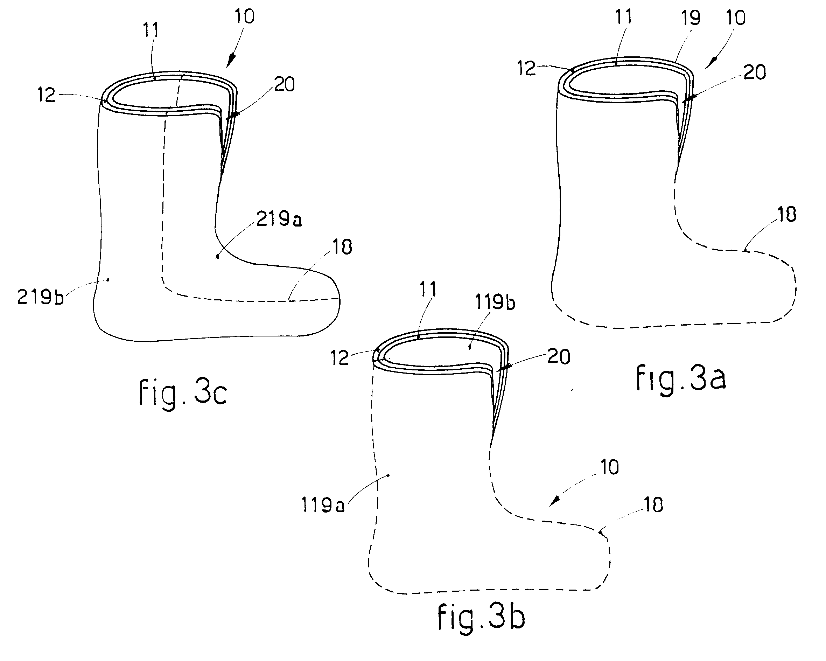

In the form shown in Fig.3a the shearing of the element from the flat sheet is carried out in such a way that the two parts 19a, 19b are sheared while keeping their common spine united.

In this case, the union between the two parts 19a, 19b is carried out by stitching 18, which extends at a substantially median position along the upper and lower parts of the inner liner 10.

In the form of embodiment shown in Figs.3b and 3c the shearing of the flat sheet is carried out to produce two separate, independent parts.

In the example of Fig.3b the two parts 119a, 119b are counterparts and are combined by stitching 18 which extends along the upper and along the sole and up the rear spine of the inner liner 10.

In the example of Fig.3c the two parts 219a, 219b have different forms; the first part 219a is associated with the upper front zone of the foot, whereas the second part 219b is associated with the rear low zone of the foot, these parts 219a, 219b being thereafter associated with each other along their respective edges by stitching 18 to form an unfinished liner.

According to another variant the structural connection between the two parts constituting the element sheared from the flat sheet is obtained with other equivalent systems such as adhesives or other systems.

The inner liners 10 shown in the figures are of a type including an opening in the front part to assist entry of the foot into the liner 10.

According to a variant which is not shown here, one of the two parts 19, 119, 219 includes a flap which is partly superimposed on the other part to close the front opening.

## Claims

1. Inner liner for sports boots, which is advantageously, but not only, for skiing boots, boots for downhill skiing or for use with snow-boards, mountaineering boots in general, ankle-boots for roller-skating or ice-skating or other types of sports boots in general, the liner being characterised in that it comprises at least a first inner layer (11) made of a spongy foam material of a low density and at least a second outer layer (12) made of a spongy foam material of a high density, the inner (11) and outer (12) layers being associated with each other.

2. Inner liner as in Claim 1, which consists of one single body.

3. Inner liner as in Claim 1 or 2, which consists of two parts connected structurally together along a great part of their periphery.

4. Inner liner as in Claim 3, in which a part of the structural connection is defined by the unbroken continuity of the sheet.

5. Inner liner as in any claim hereinbefore, in which at least one protective and reinforcing film (16) is included at least on the surface of the inner layer (11) facing towards the inside (13).

6. Inner liner as in any claim hereinbefore, in which at least one protective and reinforcing film (17) is included at least on the surface of the outer layer (12) facing towards the outside (14).

7. Inner liner as in Claim 5 or 6, in which the protective and reinforcing film (16, 17) is transpirable.

8. Method for embodiment of an inner liner (10) for sports boots, which are advantageously, but not only, skiing boots, boots for downhill skiing or for use with snowboards, mountaineering boots in general, ankle-boots for roller-skating or ice-skating or other types of sports boots in general of the type of any of the claims hereinbefore, the method being characterised in that it is carried out by injection-moulding with injection of at least one product at two times, the product being caused to expand in two different ways, the inner foam layer (11) having a low density.

9. Method for embodiment of an inner liner (10) for sports boots, which are advantageously, but not only, skiing boots, boots for downhill skiing or for use with snowboards, mountaineering boots in general, ankle-boots for roller-skating or ice-skating or other types of sports boots in general of the type of any of Claims 1 to 7 inclusive, the method being characterised in that it is carried out by shearing, according to a template from a flat sheet comprising at least two layers (11, 12) of spongy foam material of different densities, at least one element conformed with two parts, which are then combined along a great part of their periphery to produce an unfinished inner liner, care being taken to ensure that the layer of a low density is the inner layer, the unfinished liner then being thermoformed to obtain the finished liner.

10. Method as in Claim 9, in which the element is sheared while keeping the two parts (19a, 19b) united to each other along their common spine.

11. Method as in Claim 9, in which the element is sheared to form two distinct and separate parts (119a, 119b, 219a, 219b).

12. Method as in Claim 11, in which the two distinct parts are substantially counterparts and are associated together along the median plane of the liner (10).

13. Method as in Claim 11, in which the first part (219a) is associated with the front upper zone of the foot, while the second part (219b) is associated with the lower rear zone of the foot, the two parts (219a, 219b) being associated with each other along their respective edges.

14. Method as in any of Claims 9 to 13 inclusive, in which the two parts (19a, 19b, 119a, 119b, 219a, 219b) of the element are connected together by stitching (18).

15. Method as in any of Claims 9 to 14 inclusive, in which the flat sheet is obtained by combining at least two sheets of spongy foam material having different densities (11, 12) and produced separately and thereafter superimposed on each other and combined with each other.

16. Method as in any of Claims 9 to 14 inclusive, in which the two flat sheets of spongy foam material having different densities (11, 12) are combined by stitching (18).

17. Method as in Claim 15, in which the two flat sheets of spongy foam material having different densities (11, 12) are combined by adhesives.

18. Method as in Claim 15, in which the two flat sheets of spongy foam material having different densities (11, 12) are combined by hot-rolling.

19. Method as in any of Claims 9 to 18 inclusive, in which the thermoforming of the unfinished liner is carried out by bringing the liner to the softening temperature and by then placing the same on an aluminium die and inserting it into a thermoforming mould.

20. Method as in any of Claims 9 to 19 inclusive, in which the thermoforming of the unfinished liner is carried out by bringing the liner to the softening temperature and by inserting it into the boot, a foot being then inserted until the inner liner (10) is fully cooled.

21. Method as in Claim 20, in which the aluminium die is cold.

22. Method as in Claim 20, in which the aluminium die is heated.

23. Method as in any of Claims 8 to 22 inclusive, which includes the application of at least one protective and reinforcing film (16) at least on the surface of the inner layer (11) facing towards the inside (13).

24. Method as in any of Claims 8 to 23 inclusive, which includes the application of at least one protective and reinforcing film (16) at least on the surface of the outer layer (12) facing towards the outside (14).
